Europäisches Patentamt

European Patent Office

Office européen des brevets

(11) Publication number: **0 310 130 B1**

# EUROPEAN PATENT SPECIFICATION

(45) Date of publication of patent specification: **02.12.92**    (51) Int. Cl.⁵: **B62D  25/18**

(21) Application number: **88116267.1**

(22) Date of filing: **30.09.88**

(54) **Method and apparatus for controlling spray and splash caused by a vehicle while reducing the drag of the vehicle.**

(30) Priority: **02.10.87 EP 87114404**

(43) Date of publication of application:
**05.04.89 Bulletin  89/14**

(45) Publication of the grant of the patent:
**02.12.92 Bulletin  92/49**

(84) Designated Contracting States:
**AT DE FR GB IT NL SE**

(56) References cited:
**BE-A- 655 837**          **DE-A- 2 045 212**
**GB-A- 2 200 879**      **US-A- 2 619 363**
**US-A- 3 582 108**      **US-A- 4 585 242**

(73) Proprietor: **Bell Technology Associates
708 South Tejon
Colorado Springs, CO 80903(US)**

(72) Inventor: **Bell, James R.
2411 Marlborough Place
Colorado Springs, CO 80909(US)**
Inventor: **Preyss, Albert E.
1540 Tanglewood Drive,
West Chester, PA 19380(US)**
Inventor: **Forster, Tom J.,
2906 Nevermind Lane
Colorado Springs, CO 80917(US)**

(74) Representative: **Grussdorf, Jürgen, Dr. et al
Patentanwälte Zellentin & Partner Rubens-
strasse 30
W-6700 Ludwigshafen(DE)**

## Description

The present invention relates to a Vehicle having an apparatus for minimizing spraying and splashing that results when the moving vehicle encounters water and, in particular, to an apparatus that creates favorable aerodymanic flow patterns to prevent unwanted spraying and splashing, as well as reducing aerodynamic drag associated with a moving vehicle.

It is established practice for vehicles, particularly most trucks with accompanying trailers, to utilize imperforate "mud" flaps for the claimed purpose of controlling the movement of mud, sand or other debris that is contacted by the wheels of the moving vehicle. Unfortunately, use of such well-known imperforate mud flaps does not effectively control the spraying and splashing of water, which is present on the road surface and in the air as a vapor due to, for example, rain, snow, sleet and hail. In fact, the imperforate mud flap all too frequently aggrevates the spraying and splashing problem. That is, water contacted by the wheels of a large truck is directed against the flap, which is typically positioned just behind the wheel. The forceful striking of the water on the imperforate mud flap cuases both spattering and atomization of the water and causes some of the water to be laterally directed away from the truck. A measurable amount of water is also directed laterally outward as a result of the turbulent and chaotic air patterns that exist about the vehicle wheels as water is caught up in and rides on such air patterns. In the case of a multi-lane highway, the water directed laterally outward contacts any nearby vehicle -- frequently blinding the driver of the adjacent vehicle. Needless to say, splashing and spraying of water on adjacent vehicles creates a safety hazard that should be eliminated or minimized.

From BE-A 655 837 a perforated flap is known which is positioned behind a wheel to remove dirt and moisture. The flap has tapered holes with the small opening forward. The function of such arrangement, however, is not satisfactory. It is true that as the flow area expands, the flow velocity decreases. But the static pressure increases therewith. Further the air flows across an orifice with a sharp leading edge, a vena contracta forms just down stream of the throat, which causes the flow to accelerate rather than slow down. Then the flow immediately slows down to the same velocity it had before entering the hole. Thus there is no deceleration of the flow to a velocity less than the velocity approaching the hole. Consequently there can be no reduction in momentum for water or mud particles, and no falling out of them.

The present invention uses perforated flaps and is directed to solving the spray and/or splash problem in an effective and yet practical manner. In its broader aspects the invention disclosed herein improves the streamlining of fluid by controlling vortices of air and water. A further valuable effect of the present invention is its ability to noticeably reduce the drag of the moving vehicle, unlike conventional imperforate mud flaps or other known devices.

This problem is solved by a vehicle having an apparatus according to claim 1. Special shapes for the perforations are to be found in the subclaims.

To produce the improved streamlining and concomitant pressure recovery that is desirable for eliminating, or at least minimizing the spray/splash problem, two preferred embodiments of the present invention have been identified or developed thus far. In one embodiment, a flap-like device having a number of suitably shaped perforations or holes, preferably being tapered, is provided behind the vehicle wheels. One or more flap-like devices are located on the vehicle in a predetermined pattern in order to best counteract or control vortices of air and liquid that are generated when the vehicle moves through water in the air and/or located on the road surface.

The holes are used in converting large cell vortices that impinge on the device to a number of smaller vortices and thereby induce a more streamlined fluid flow. The flap-like device causes most of the liquid or moisture that contacts the flap to be separated from the impinging vortices by centrifugal action so that the liquid or water moves down along the flap surface to its bottom whereby the water is released to the road surface. At the same time, air and/or minute droplets or moisture pass through the holes and continue along towards the back of the vehicle, such as the rear of the trailer of the truck/trailer tandem. Because of these effects, the spraying and/or splashing of water laterally from the flap surface is reduced. In addition, it has been noted that the improved streamlining, due to the flap-like devices, reduces the aerodynamic drag of the truck/trailer. Because of the generally square corner truck configuration, vortices are developed along the sides of the truck and, depending upon their strength extend laterally outwardly for a distance away from the truck. These vortices cause considerable vehicle drag because such vortices effectively add to the width of the truck/trailer. The flap-like devices located adjacent to the vehicle wheels reduce the chaotic flow behavior that is generated, entrap vortices that are created due to the geometric configuration of the vehicle, and promote pressure recovery behind the devices.

In view of the foregoing summary, a number of worthwhile objectives are seen to be realized by the present invention. First, the invention embodiments control outward, lateral spraying and/or splashing of water that normally occurs when a moving vehicle passes through water located on a road surface and/or encounters water or vapor in the air. Relatedly, the intensity of vortices of liquid and air is reduced. As as result of this controlling of water and vortices of air and water, a safety hazard associated with the spraying or splashing of water on adjacent vehicles is substantially prevented.

The invention is described in more detail by referring to the accompanying drawings wherein some preferred embodiments of the apparatus of the invention are shown.

Fig. 1

is a diagramatic representation of fluid flow patterns that are developed when a vehicle wheel contacts water on a road surface using a conventional imperforate mud flap;

Fig. 2

is a diagramatic representation of a pattern of vortices that is created about a moving truck;

Fig. 3

is a perspective view of the flap-like device of the present invention showing the device stripping moisture from vortices that contact the device;

Fig. 4

is an enlarged, fragmentary frontal view of the flap-like device showing the tapered holes;

Fig. 5

is an enlarged, lateral section, showing the tapered holes of the flap-like device;

Fig.5A

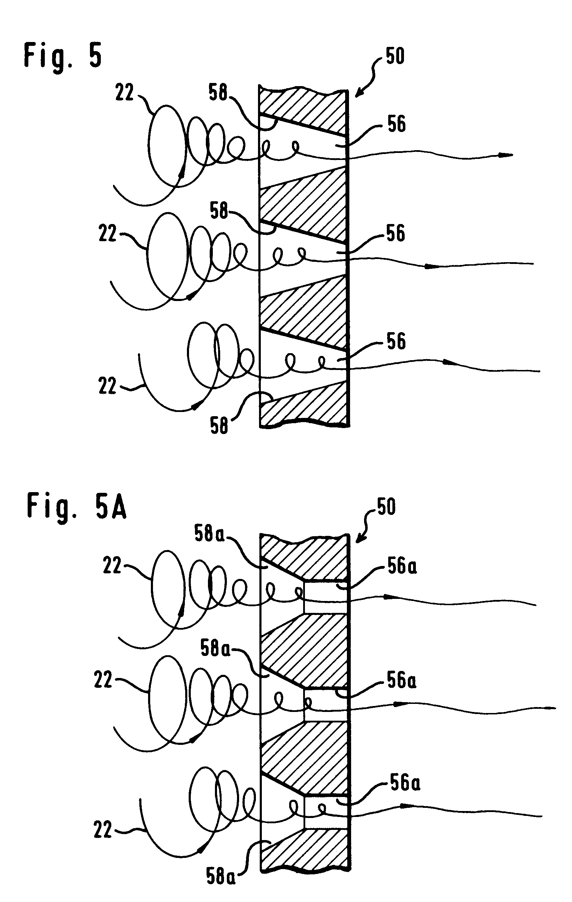

is an enlarged, lateral section showing the holes of of Fig. 5 in a modified configuration;

Fig. 6

is an enlarged, lateral section showing the holes in a venturi-like configuration;

Figs. 6A and 6B

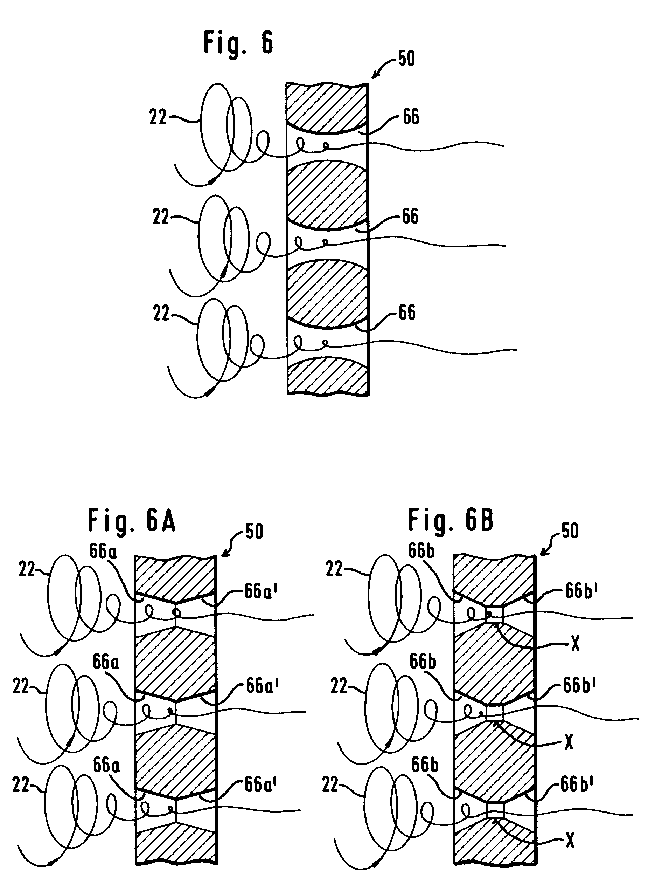

are enlarged lateral sections showing the holes of Fig. 6 in modified configurations;

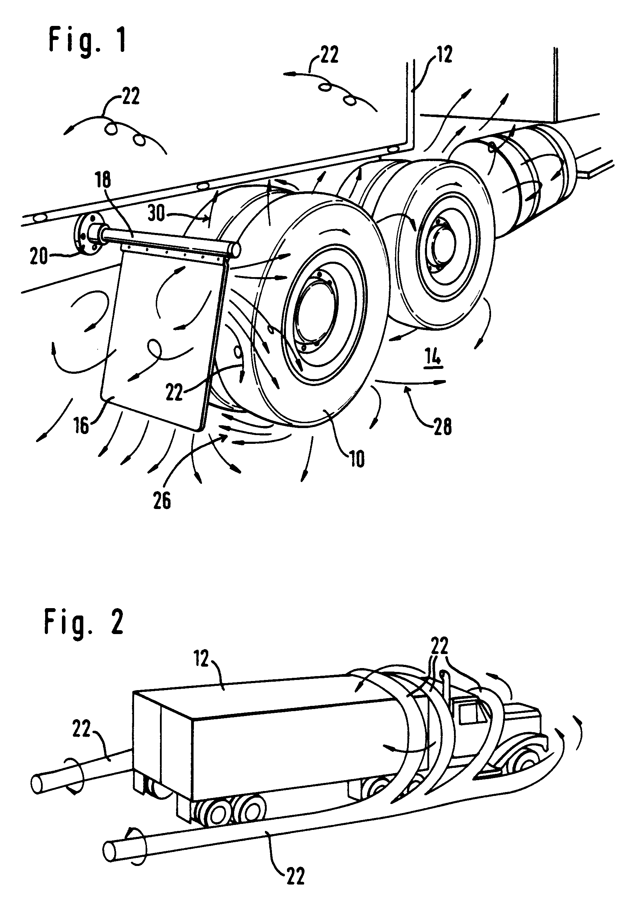

With reference to Fig. 1 the spraying and/or splashing problem to be solved by the embodiments of the present invention is illustrated. A wheel 10 of a vehicle 12, such as a truck and trailer tandem, is depicted as it moves over a road surface 14 that has a layer or patches of water and/or in which there is water in the air. The vehicle 12 includes a common, imperforate or prior art mud flap 16 extending downwardly from the underside of the trailer of the vehicle 12. The mud flap 16 is attached to the trailer by means of a support member 18 and a fastener 20. As is well known, the imperforate mud flap 16 is intended to prevent the passing of mud, sand, or other debris to the rear of the vehicle where it could subsequently strike a vehicle following the truck 12.

In the illustration of Fig. 1, as well as Fig. 2, vortices 22 of air and water, including mist and spray, are generated about the vehicle 12. The vortical flow Patterns 22 are created as a result of two major factors, namely the rotation of the wheel 10 and the "square-cornered" configuration of the vehicle 12. In the case of the vortices 22 shown in Fig. 2, which extend along the longitudinal sides of the vehicle 12, somewhat idealized flow patterns are illustrated. Because of the square corners associated with the vehicle 12, relatively strong vortices 22 are generated and tend to make the truck 12, in aerodynamic area, several times as large as it would otherwise be. Additionally, unlike the idealized patterns, there are typically hundreds of separate vortices that contribute to an overall complex flow pattern about the vehicle 12. Such vortices 22 are a significant cause of the spray and/or splash problem, as well as causing appreciable vehicle drag.

In connection with the development of vortices 22 of air and water, the water is obtained both from water present on the road surface 14 and water or vapor present in the air. As represented in Fig. 1, a number of water components are generated as the wheel 10 moves through the water and/or vapor. A rear wave of water 26 is produced by the rotating wheel 10 as it contacts water on the road surface causing water to be thrown in a direction rearward of the flap 16. A side wave of water 28 also results from such contact as the water is displaced in a laterally outward direction relative to the truck 12. As the wheel 10 rotates, it also carries water with it and tends to release the water near the top of the wheel revolution. The water released at the top of the wheel 10 is joined with moisture in the air to define a top wave of water 30 formed in a region above the wheel 10. Each of the water components, in combination with the chaotic or turbulent air flow patterns, create the hundreds of vortices 22 of air and water. A number of the vortices 22 act to carry water and moisture away from the vehicle 12. When other vehicles are in the path of such vortices 22, water is sprayed or splashed against the adjacent vehicle, which can cause the driver thereof to be temporarily blinded creating a dangerous driving situation including the possible loss of control of the vehicle. Also, such vortices 22 can generate considerable air turbulence in the path of the adjacent vehicle tending to cause buffeting of the adjacent vehicle.

Solutions to the foregoing spray and/or splash and vehicle drag problems are found in the embodiments of the present invention. Generally speaking, each of the embodiments is devised to improve the streamlining of fluid adjacent to the underside of the vehicle and/or the road surface. This streamlining results in desirable pressure recovery at the downstream or back side of the inventive embodiments such that relatively lower pressure areas are not formed behind the inventive embodiments.

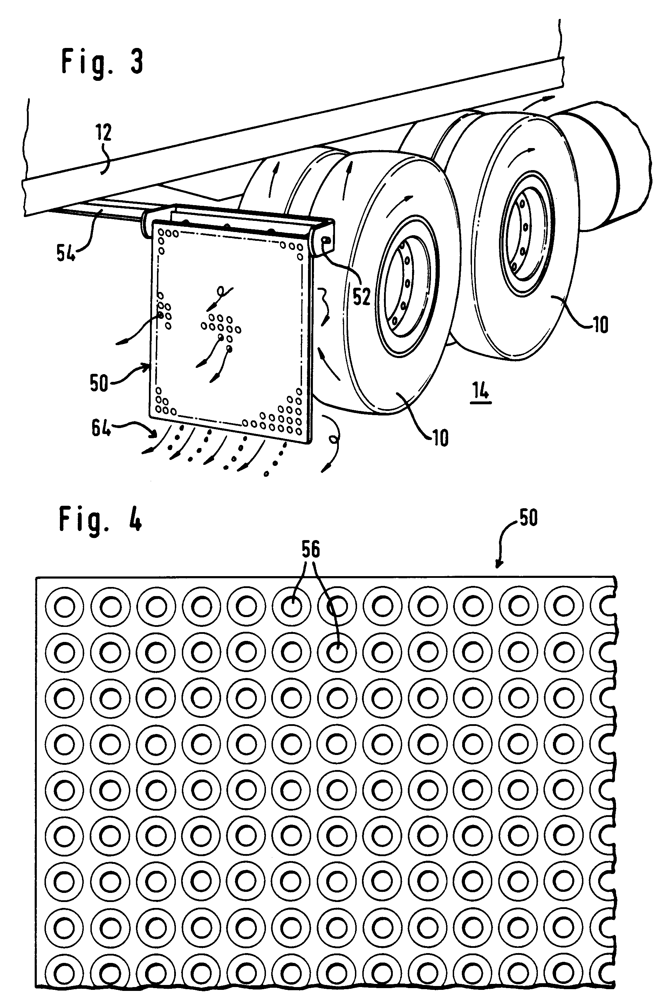

One of the embodiments is depicted in Figs. 3 to 5. A flap-like device 50 is provided behind each set of vehicle wheels 10. In the depicted usage, the truck or vehicle 12 includes dual axle wheels. The flap-like device 50 is mounted at its top to a rod 52 which is received in holes of a support bar 54. The support bar 54 is attached beneath the frame of the trailer of the vehicle 12.

The flap-like device 50 includes a number of holes or perforations 56 spaced in a grid fashion throughout the rectangular configuration of the flap-like device 50. In one configuration each of the holes 56 is defined by tapered walls 58 formed on the side of the device 50 against which vortices 22 impinge. When vorticular patterns of water and/or air are present in the vicinity thereof, the holes 56 in the flap-like device 50 act to convert impinging large cell vortices to a number of smaller cell vortices as the flow moves through the holes 56. This process extracts most of the water, substantially eliminates the spattering and atomization of water that characterizes prior art flaps, and also substantially eliminates the presence of large cell vortices behind the flap, resulting in desired pressure recovery behind the flap. It has been observed that substantially all water 64 in the flow that contacts the device 50 departs from the bottom edge thereof, as illustrated in Fig. 3. Because of this removal of water from the flow, essentially only air and very small droplets of water (mist) pass through the holes 56. While the air and mist are passing through the holes 56, the relatively large water droplets 64 travel downwardly along the device 50 and are released as a stream of water to the road surface 14 below the device 50. As a result, vortices that cause spray and splash are substantially prevented from moving laterally in an outward direction relative to the vehicle 12.

In addition to controlling spray and splash by controlling vortices 22 containing air and water, the flap-like device 50 also acts to reduce the drag of the vehicle 12. As previously discussed herein, vortices 22 are generated by the aerodynamically inefficient vehicle 12. Symmetrically disposed devices 50 cause the normally present chaotic flow patterns to be more streamlined and reduce the lateral extent of the vortices that can be created along the sides of the vehicle 12. The devices 50 also tend to create rolled-up stable vortices confined only to the lane of the highway in which the truck 12 is moving thereby noticeably reducing the drag of the vehicle 12. Specifically, because of the tapered holes 56, unwanted large vortices are controlled thereby producing improved streamlined flow and pressure recovery behind the device 50.

It should be appreciated that the drag reduction capability of the flap-like device is present even when there is no moisture or liquid.

It should be understood too that the holes 56 can be of different configurations so long as they are not saturated with moisture and are able to pass the majority of the air flow impinging the flap-like device.

By way of example Fig. 5A shows a modified configuration of the holes 56 as illustrated in Fig. 5. Said modified configuration of the hole has a tapered portion 58a and a portion 56a having parallel walls. The tapered portion 58a of the hole opens to the side of the device 50 against which vortices 22 impinge.

Also by way of example, other embodiments are illustrated in Figs. 6, 6A, and 6B, whereby the basic shape of the holes is shown in Fig. 6. Here the holes 66 in the flap-like device 50 have a venturi-like configuration in which a portion of each hole 66 is tapered in both the front and back sides of the device 50, whereby the opposite walls of each hole 66 are curved.

The venturi-like configuration of the Fig. 6 is modified in Figs. 6A and 6B. The walls of the tapered portions 66a and 66a' in Fig. 6A are straight, whereby both portions 66a and 66a' can be of equal length so that the narrowest passage through the hole is midway of the axis of the hole, namely between the opposite vertices of the angles formed by the tapered portions 66a and 66a'.

A similar venturi-like configuration of the holes in the flap-like device 50 is shown in Fig. 6B wherein between the opposite tapered portions 66b and 66b' a portion is provided having opposed straight and parallel walls X.

It should be understood that the exact geometry and placement of the flap-like devices need not be the same for different sized or configured vehicles. The size of the holes and their location can be predetermined based on the geometry of the vehicle to which the flap-like device is to be attached. Relatedly, the length and width of the flap-like device will also depend upon the specific configuration of the vehicle 12. It is believed that each flap-like device will be positioned between about a few to several inches from the rear of the vehicle wheel 10. In addition, the plane of the flap-like device may be perpendicular to the longitudinal extent of the vehicle 12 or it may be canted at an angle other than 90° so as to direct and entrain vortices beneath the vehicle 12.

## Claims

1. A vehicle having an apparatus for controlling spray and/or splash caused by the vehicle contacting water and/or for reducing the drag of the vehicle, the apparatus comprising fluid control means having a forward side against which a vortex of fluid impinges and a rear side and being positioned adjacent the rear of a wheel of the vehicle and including means for streamlining fluid flow to enhance pressure recovery on said rear side of said fluid control means and means (52, 54) connecting said fluid flow control means to the vehicle, said fluid flow control means including a flap like device (50), having a number of holes (56, 66), wherein one or more holes are tapered or have a tapered portion the orientation of the holes (56, 66) in the flap like device (50) being such that the cross section of the holes (56, 66) narrows in the rearward direction.

2. Vehicle as claimed in claim 1, wherein a portion (56a) of the holes downstream adjacent to the narrowing section (58a) of the holes has parallel walls.

3. Vehicle as claimed in claim 1 wherein one or more holes (66) are venturi shaped having curved or X shaped cross sections (66a, 66a'), possibly with a portion having straight parallel walls (x) between the widening parts.

**Patentansprüche**

1. Fahrzeug mit einer Vorrichtung zur Kontrolle des beim Kontakt des Fahrzeugs mit Wasser verursachten Sprühnebels und Spritzwassers und zur Reduzierung des Widerstandes des Fahrzeuges, wobei die Vorrichtung Mittel zur Lenkung von fließfähigem Medium mit einer Vorderseite aufweist, gegen die ein Wirbel des fließfähigen Mediums auftrifft sowie eine Rückseite und die nahe der rückwärtigen Flanke eines Rades des Fahrzeuges positioniert ist und Mittel zur Glättung des Flusses des fließfähigen Mediums besitzt, die den Druckausgleich auf der Rückseite des Mittels zur Lenkung des fließfähigen Mediums verbessern sowie Mittel (52, 54) zur Befestigung des Lenkungsmittels am Fahrzeug, wobei das Lenkungsmittel eine klappenartige Vorrichtung (50) mit einer Anzahl von Löchern (56, 66) einschließt, wobei eines oder mehrere Löcher (56, 66) sich verengend ausgebildet oder mit einem sich verengenden Abschnitt versehen sind und die Orientierung der Löcher (56, 66) in der klappenartigen Vorrichtung (50) derart ist, daß der Querschnitt der Löcher (56, 66) sich in rückwärtiger Richtung verengt.

2. Fahrzeug nach Anspruch 1, bei welchem ein Bereich (56a) der Löcher stromabwärt nahe des sich verengenden Abschnitts (58a) eine parallele Wandung aufweist.

3. Fahrzeug nach Anspruch 1, bei welchem eines oder mehrere Löcher (66) mit einer Venturi-Form mit kurvenförmigen oder X-förmigen Querschnitten (66a, 66a') gegebenenfalls mit gestreckten parallelen Wandungen zwischen den sich erweiternden Teilen ausgebildet sind.

**Revendications**

1. Véhicule comportant un dispositif pour maîtriser la pulvérisation et/ou l'éclaboussement provoqués par le véhicule venant en contact avec de l'eau et/ou pour diminuer la trainée de ce véhicule, ce dispositif comprenant des moyens pour maîtriser le fluide, ayant une face avant contre laquelle se heurte un tourbillon de fluide et une face arrière, et positionnés au voisinage de l'arrière d'une roue du véhicule, et comprenant des moyens pour régulariser le régime d'écoulement du fluide afin d'améliorer la récupération de pression sur ledit côté arrière desdits moyens de contrôle du fluide, et des moyens (52,54) reliant au véhicule lesdits moyens pour maîtriser l'écoulement du fluide, ces moyens comprenant un dispositif (50) analogue à une bavette, comportant un certain nombre de trous (56,66), l'un, ou plusieurs, des trous étant convergents ou ayant une portion convergente, l'orientation des trous (56,66) dans le dispositif (50) analogue à une bavette étant telle que la section transversale des trous (56,66) diminue vers l'arrière.

2. Véhicule suivant la revendication 1, dans lequel une portion (56a) des trous en aval, au voisinage de la section décroissante (58a) des trous, a des parois parallèles.

3. Véhicule suivant la revendication 1, dans lequel l'un, ou plusieurs, des trous (66) ont la forme d'un venturi, avec des sections transversales incurvées ou en forme d'X (66a,66a'), éventuellement avec une portion ayant des parois rectilignes parallèles (X) entre les portions qui s'élargissent.

Fig. 1

Fig. 2

**Fig. 3**

**Fig. 4**

Fig. 5

Fig. 5A

## Fig. 6

## Fig. 6A

## Fig. 6B